# EUROPEAN PATENT APPLICATION

(11) **EP 2 028 534 A2**
(43) Date of publication of application: **25.02.2009**
(21) Application number: 08157324.8
(22) Date of filing: 30.05.2008
(51) Int. Cl.: G02F 1/09

(54) **Reflective magnetic display**

(30) Priority: 20.08.2007 KR 20070083448
(71) Applicant: Samsung Electronics Co., Ltd., Suwon-si Gyeonggi-do 443-742 (KR)
(72) Inventor: Choi, Yoon-sun c/o Samsung Advance Institute of Technology, Yongin-si, Gyeonggi-do (KR); Lee, Moon-gyu c/o Samsung Advance Institute of Technology, Yongin-si, Gyeonggi-do (KR); Lee, Su-mi c/o Samsung Advance Institute of Technology, Yongin-si, Gyeonggi-do (KR); Cho, Sung Nae c/o Samsung Advance Institute of Technology, Yongin-si, Gyeonggi-do (KR); Hwang, Seong-mo c/o Samsung Advance Institute of Technology, Yongin-si, Gyeonggi-do (KR)
(74) Representative: Greene, Simon Kenneth

(57) **Abstract**

A reflective magnetic display includes a magnetic material layer region (61) formed between front (53) and rear (51) substrates, wherein the magnetic material layer region has magnetic particles that reflect or absorb incident light when magnetic moments are randomly oriented and reflect or transmit the incident light in, accordance with polarization of the incident light, when the magnetic moments are aligned in a direction and an electrode that is designed to apply a magnetic field inducing a magnetic moment alignment on the magnetic material layer region in accordance with electrical operation.

## Description

### BACKGROUND OF THE INVENTION

The present invention relates to a reflective magnetic display and, more particularly, to a reflective magnetic display that displays an image by switching light reflection in units of pixels or sub-pixels by using a magnetic material.

A liquid crystal display (LCD) is a thin, flat display device having an array of color/monochrome pixels. Since LCDs have low power consumption, they are most widely used as displays for electronic devices that are supplied with electrical power from batteries where low power consumption plays an important role.

For example, LCDs are used as flat display panels, televisions, personal digital assistants (PDA), mobile phones requiring a high luminance display, and the like.

An LCD displays an image by switching polarization of light passing through a liquid crystal layer by applying an electric field to the liquid crystal layer.

A process for aligning a liquid crystal is required for manufacturing LCDs. A process for forming a multi-domain is also necessary to improve viewing angle. In addition, expensive additional parts, such as compensation plates and the like are necessary.

As described above, in order to manufacture LCDs, expensive parts and complicated processes, such as the liquid crystal alignment process and the multi-domain forming process, are necessary.

Therefore, instead of using the liquid crystal requiring the alignment process and the like, there is a need to develop a display, which uses a switching device that can be manufactured through a simpler and less costly process.

### SUMMARY OF THE INVENTION

The present invention provides a reflective magnetic display that can be manufactured with less expense by applying a switching device using a magnetic material.

According to an exemplary aspect of the present invention, there is provided a reflective magnetic display comprising:
a magnetic material layer region formed between front and rear substrates, wherein the magnetic material layer region comprises magnetic particles that reflect incident light when magnetic moments are randomly oriented and reflect or transmit the incident light, in accordance with polarization of the incident light, when the magnetic moments are aligned in one direction;
an electrode that applies a magnetic field inducing a magnetic moment alignment on the magnetic material layer region in accordance with electrical operation; and
a polarizer that is disposed on the front substrate and has a polarization transmission axis in parallel with the magnetic moments of the magnetic material layer region when the magnetic moments are aligned in the one direction.

The reflective magnetic display may further include an absorption member that is disposed on the rear substrate to absorb light passing through the magnetic material layer region.

The magnetic particles may be formed of at least one material selected from the group consisting of: iron, cobalt, palladium, and nickel, an alloy thereof and a paramagnetic material.

According to another aspect of the present invention, there is provided a reflective magnetic display comprising:
a magnetic material layer region formed between front and rear substrates, wherein the magnetic material layer region comprises magnetic particles that absorb incident light when magnetic moments are randomly oriented and reflect or transmit the incident light, in accordance with polarization of the incident light, when the magnetic moments are aligned in one direction; and
an electrode that is designed to apply magnetic field inducing a magnetic moment alignment on the magnetic material layer region in accordance with electrical operation,
wherein unpolarized light is incident on the magnetic material layer region.

The magnetic particles may comprise iron oxide.

The reflective magnetic display may further comprise a reflection member for reflecting the light passing through the magnetic material layer region towards the magnetic material layer region.

Each of the magnetic particles of the magnetic material layer region may be formed in a core-shell structure comprising a magnetic core and an insulation shell enclosing the magnetic core or the magnetic material layer may be formed to comprise only a magnetic core.

The magnetic material layer region may be formed by stacking the magnetic particles or dispersing the magnetic particles in at least one of an inorganic or an organic insulation matrix.

The reflective magnetic display may further comprise a pixel having a plurality of sub-pixels and a color filter disposed on the front substrate, wherein each of the sub-pixels has the magnetic material layer region, to display a color image.

Each of the sub-pixels may comprise a thin film transistor for operating the sub-pixels.

The electrode may comprise:
a sub-pixel electrode disposed on the rear substrate;
a common electrode disposed on the front substrate;
a conductive barrier rib electrically connected to the sub-pixel electrode and the common electrode, and disposed between the sub-pixels, thereby forming a loop circuit for each of the sub-pixels.

The common electrode may be formed on an entire surface or patterned to be operated in units of pixels or sub-pixels.

At least one of the sub-pixel electrode, the common electrode, or the conductive barrier rib may be transparent.

According to exemplary embodiments of the present invention, since the reflective magnetic display has a magnetic material layer that reflects or absorbs incident light when magnetic moments are randomly oriented in a switching region and that transmits or reflects the incident light in accordance with polarization when the magnetic moments are aligned in a direction, the reflective magnetic display can be manufactured at a lower cost as compared with an LCD.

In addition, since the reflective magnetic display does not have any part limiting a viewing angle, the reflective magnetic display may realize a wide viewing angle.

Furthermore, since the reflective magnetic display either uses one polarizer or no polarizer at all, the light efficiency of the reflective magnetic display may be improved, and the visibility in an outdoor environment may be further improved.

Some Exemplary embodiments of the present invention may have reduced cost, improved viewing angles, improved light efficiency, and improved visibility. However, an embodiment is not required to have a reduced cost, improved viewing angle, improved light efficiency, or improved visibility.

### BRIEF DESCRIPTION OF THE DRAWINGS

Aspects of the present invention will become more apparent by describing in detail exemplary embodiments thereof with reference to the attached drawings in which:
FIG. 1 and FIG. 2 illustrate reflection/transmission of incident light when an external magnetic field is applied and when the external magnetic field is not applied to a circumference of a magnetic material layer reflecting the incident light in a state where magnetic moments are randomly oriented;
FIG. 3A is a partially sectional view of a magnetic material layer containing magnetic particles each having a core shell structure;
FIG. 3B is a partially sectional view of a magnetic material layer containing magnetic particles each having only a core;
FIGS. 4A and 4B illustrate a normally white mode structure when a magnetic material layer, which is designed to reflect incident light in a state where magnetic moments are randomly oriented, is applied to a reflective magnetic display;
FIGS. 5A and 5B illustrate a normally white mode structure when a magnetic material layer, which is designed to reflect incident light in a state where magnetic moments are randomly oriented, is applied to a reflective magnetic color display;
FIGS. 6A and 6B illustrate a normally black mode structure when a magnetic material layer, which is designed to absorb incident light in a state where magnetic moments are randomly oriented, is applied to a reflective magnetic display;
FIG. 7 is a schematic sectional view of a reflective magnetic display having a normally white mode according to an embodiment of the present invention;
FIGS. 8A and 8B illustrate reflection switching of incident light in accordance with an alignment state of magnetic moments in one sub-pixel of the reflective magnetic display of FIG. 7; and
FIG. 9 is a schematic sectional view of a reflective magnetic display having a normally black mode according to another embodiment of the present invention.

### DETAILED DESCRIPTION OF THE INVENTION

Exemplary embodiments of the present invention will now be described more fully with reference to the accompanying drawings.

A reflective magnetic display of an exemplary embodiment of the present invention uses a magnetic material to perform light switching for displaying an image. The magnetic material reflects or absorbs incident light in a state where magnetic moments are randomly oriented. When the magnetic moments are aligned in one direction, the magnetic material transmits light having a magnetic field perpendicular to an aligned direction of the magnetic moments (i.e., light having polarization in parallel with the aligned direction of the magnetic moments) and the magnetic material reflects light having a magnetic field in parallel with the aligned direction of the magnetic moments (i.e., light having polarization perpendicular to the aligned direction of the magnetic moments).

Since light is an electromagnetic wave, it includes magnetic and electric field components which oscillate perpendicular to each other. The reflective magnetic display of an exemplary embodiment of the present invention uses the principle that electromagnetic waves are radiated by the generation of induced magnetic moments when light having a magnetic field component in parallel with the magnetic moments is irradiated on the magnetic material.

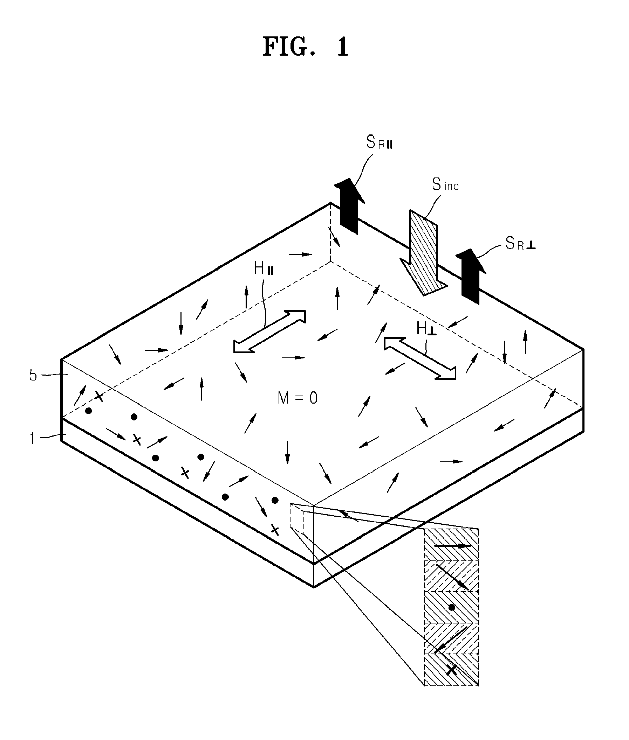

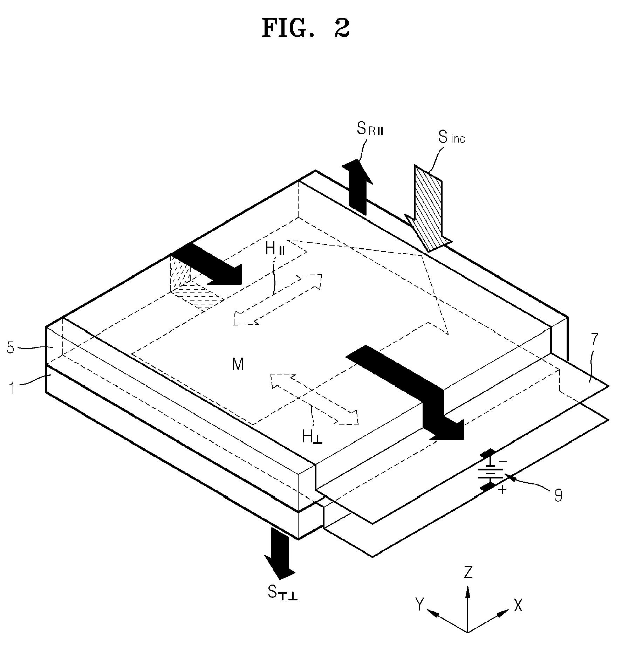

For example, the magnetic material applied to the reflective magnetic display of an embodiment of the present invention may reflect the incident light in a state where the magnetic moments are randomly oriented and may transmit or reflect the incident light, in accordance with the incident light's polarization, in a state where the magnetic moments are aligned in one direction by the application of an external magnetic field to the magnetic material, as shown in FIGS. 1 and 2.

In FIGS. 1 and 2, the reference characters H_{∥} and H_{⊥} respectively indicate a magnetic field of light in parallel with the magnetic moment-aligned direction (i.e., an effective magnetization direction) of a magnetic material layer 5 formed on a transparent substrate 1 and a magnetic field perpendicular to the moment-aligned direction when the moments are aligned in a direction by an external electric field as shown in FIG. 2.

In addition, in FIGS. 1 and 2, the reference character S_{inc} indicates incident light and the reference character S_{R∥} indicates reflective light having a magnetic field in parallel with a magnetic moment-aligned direction of the magnetic material layer 5. Furthermore, the reference character S_{R⊥} indicates reflective light having a magnetic field perpendicular to the magnetic moment-aligned direction of the magnetic material layer 5 and the reference character S_{T⊥} indicates transmission light having a magnetic field perpendicular to the magnetic moment-aligned direction of the magnetic material layer 5.

FIG. 1 illustrates a case where no external magnetic field is applied to the circumference of the magnetic material layer 5. When the external magnetic field is not applied to the circumference of the magnetic material layer 5, all of the magnetic moments in the magnetic material layer 5 are randomly oriented in multiple directions as indicated by arrows in FIG. 1. In FIG. 1, the reference symbol "." indicates magnetic moments coming out from the side surface of the magnetic material layer 5 and the reference symbol "x" indicates magnetic moments going into the side surface of the magnetic material layer 5. Furthermore, in FIG. 1, as shown by the enlarged view on the right, the magnetic moments in the magnetic material layer 5 are randomly oriented in a horizontal direction as well as a vertical direction. Therefore, when the external magnetic field is not applied to the magnetic material layer 5, the magnetic material layer 5 does not have an effective magnetization (M=0).

In this case, as illustrated in FIG. 1, the light incident on the magnetic material layer 5 is not affected by the magnetic material layer 5 and is fully reflected by the magnetic material layer 5 regardless of the polarization components. This will be described in more detail herein below.

FIG. 2 illustrates a case where the external magnetic field is applied to the circumference of the magnetic material layer 5. As illustrated in FIG. 2, in order to apply the magnetic field to the circumference of the magnetic material layer 5, a plate-shaped and transparent electrode 7 disposed around the magnetic material layer 5 may be used. At this point, the transparent electrode 7 may be formed of a transparent conductive material such as indium tin oxide (ITO).

When a power source 9 applies a current to the transparent electrode 7, allowing a surface current to flow in a specific direction, the magnetic moments that are randomly oriented may be aligned in one direction. For example, when the current flows in a clockwise direction along the transparent electrode 7 disposed around the magnetic material layer 5, the external magnetic field is induced by the surface current and thus, as illustrated in FIG. 2, the magnetic moments of the magnetic material layer 5 are aligned. The aligned direction is a direction of the external magnetic field (i.e., +x direction). Therefore, the magnetic material layer 5 has effective magnetization (M ≠ 0) in the external magnetic field direction (+x direction). In FIG. 2, the wide arrow indicates the effective magnetization direction. The effective magnetization direction is the magnetic moment-aligned direction and is in parallel with the magnetic field direction H_{∥} of the light.

Then, as shown in FIG. 2, the light having the magnetic field direction H_{∥} in parallel with the moment-aligned direction (effective magnetization direction) of the magnetic material layer 5 is reflected, while the light having the magnetic field direction H_{⊥} perpendicular to the magnetic moment-aligned direction transmits through the magnetic material layer 5.

That is, when the light having the magnetic field direction H_{∥} in parallel with the moment-aligned direction is incident on the magnetic material layer 5, induced magnetic moments are generated. The induced magnetic moments are oscillated in accordance with a variation of magnetic field amplitudes of the light in the magnetic field direction H_{∥} in parallel with the moment-aligned direction in accordance to time variation.

Therefore, according to the principles of electromagnetic wave radiation, the electromagnetic wave is generated by the induced magnetic moments. The generated electromagnetic wave may be propagated in all directions. Therefore, when the magnetic material layer 5 is designed to have a thickness greater than a magnetic decay length, similar to a skin depth, to which the electric field of light can penetrate when the light is incident on the metal layer, the electromagnetic waves generated by the induced magnetic moment cannot be transmitted through the magnetic material layer 5. Therefore, the light having the magnetic field direction H_{∥} in parallel with the moment-aligned direction of the magnetic material layer 5 is reflected by the magnetic material layer 5. Here, when the electromagnetic wave (light) is incident on the metal layer and a thickness of the metal layer is greater than the skin depth, the electromagnetic wave is decayed, as a result of which the incident light is fully reflected by the metal layer.

Meanwhile, the light having the magnetic field direction H_{⊥} perpendicular to the magnetic moment-aligned direction (effective magnetization direction) is incident on the magnetic material layer 5, the light does not react with the magnetic moments and thus no induced magnetic moment is generated. As a result, it can be regarded that the magnetic material layer 5 does not exist for the light having the magnetic field direction H_{⊥} perpendicular to the magnetic moment-aligned direction. That is, the light having the magnetic field direction H_{⊥} perpendicular to the magnetic moment-aligned direction is not reflected by the magnetic material layer but is transmitted through the magnetic material layer 5.

In addition, as illustrated in FIG. 1, since the magnetic moments are randomly oriented in the horizontal and vertical directions when the magnetic moments are randomly oriented, the light proceeding in the magnetic material layer 5 may react with the magnetic moments that are aligned in parallel with the magnetic field components. As a result, the incident light is fully reflected regardless of the polarization.

As described above, the magnetic material layer 5 which fully reflects the incident light when the magnetic moments are randomly oriented, may be formed of a magnetic material having a strong magnetic property such as cobalt, palladium, nickel, or an alloy having thereof or a magnetic material having a paramagnetic property. For example, the magnetic material layer 5 may be formed of a material containing CoPt.

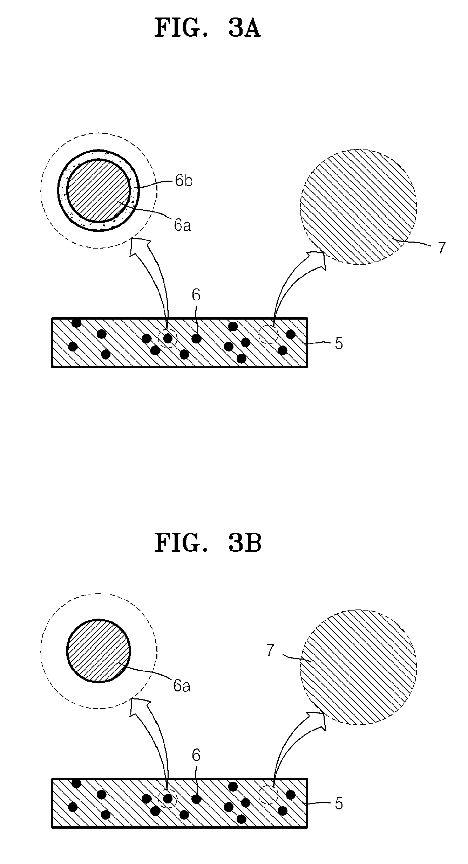

FIG. 3A is a partially sectional view of a magnetic material layer containing magnetic particles each having a core shell structure. FIG. 3B is a partially sectional view of a magnetic material layer containing magnetic particles each having a core.

As shown in FIGS. 3A and 3B, the magnetic material layer 5 may be formed by multi-stacking magnetic particles 6. For simplicity, FIGS. 3A and 3B show that the magnetic particles 6 are not densely distributed in the magnetic material layer 5. However, the magnetic particles 6 are very densely distributed in the magnetic material layer 5 in reality.

Referring to FIG. 3A, in order to prevent the magnetic particles 6, which each have a conductive magnetic core, from lumping together or electrically contacting each other, each of the magnetic particles 6 may be formed in a core-shell structure having a core 6a formed of a conductive magnetic material and a transparent non-magnetic insulation shell 6b enclosing the core 6a. In addition, the region between the magnetic particles 6 may be filled with a transparent insulation medium.

At this point, the core 6a may be formed of metal having a strong magnetic property and strong conductivity such as cobalt and nickel. The insulation shell 6b may be formed of SiO₂ or other insulation materials.

The following describes a process for forming the magnetic material layer 5 containing the magnetic particles 6 having the core-shell structure.

Fine magnetic particles are prepared using a magnetic material to form the magnetic moments, and core shells, each with a thickness of several tens of nanometers, are formed by using insulation material to isolate the magnetic particles from each other. The magnetic particles with the core shells are coated on a substrate on which a transparent electrode pattern is formed using a solvent or polymer matrix, thereby forming the magnetic material layer 5. The substrate may be a rear substrate on which a sub-pixel electrode is formed.

Referring to FIG. 3B, the magnetic material layer 5 may be formed by stacking the magnetic particles 6, each containing only a spherical core 6a formed of a metal having a strong magnetic property and high conductivity such as cobalt, palladium, and nickel. At this point, the region between the magnetic particles 6, which each have only the core 6a, may be filled with a transparent insulation medium 7. The magnetic material layer 5 may be formed by dispersing the magnetic particles 6, which each have only the core 6a, on an inorganic or organic insulation matrix.

In order to obtain a polarization ratio of 3500:1, there is a need to stack more than 60 magnetic particle layers. The number of magnetic particle layers may be adjusted based on the matrix used and the density and coating condition of the magnetic particles. Since the cores and the core shells enclosing the cores may be easily manufactured with sizes of several tens of nanometers, a thin display having the magnetic material layer 5 with a several micrometer thickness can be realized. In addition, since the magnetic material layer 5 can be formed using a relatively inexpensive process such as spin casting, the manufacturing cost of the reflective magnetic display can be lowered.

The magnetic material layer 5 forms a switching region of a reflective magnetic display that operates with a normally white mode according to an embodiment of the present invention.

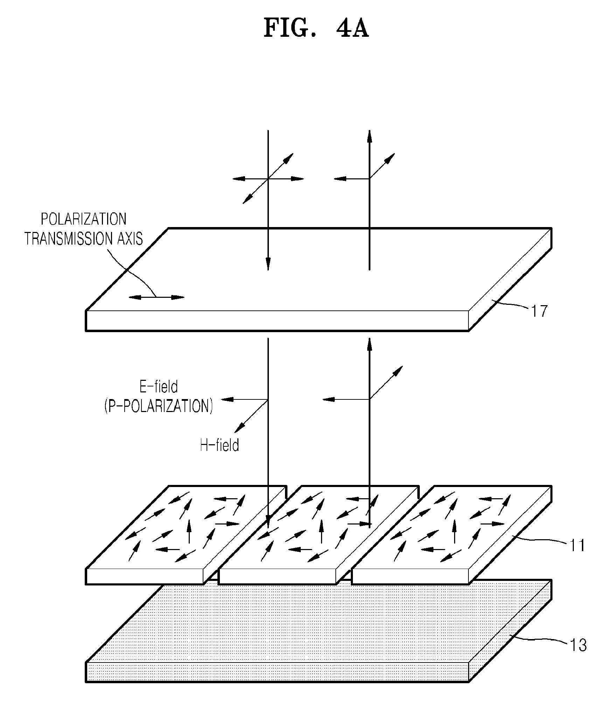

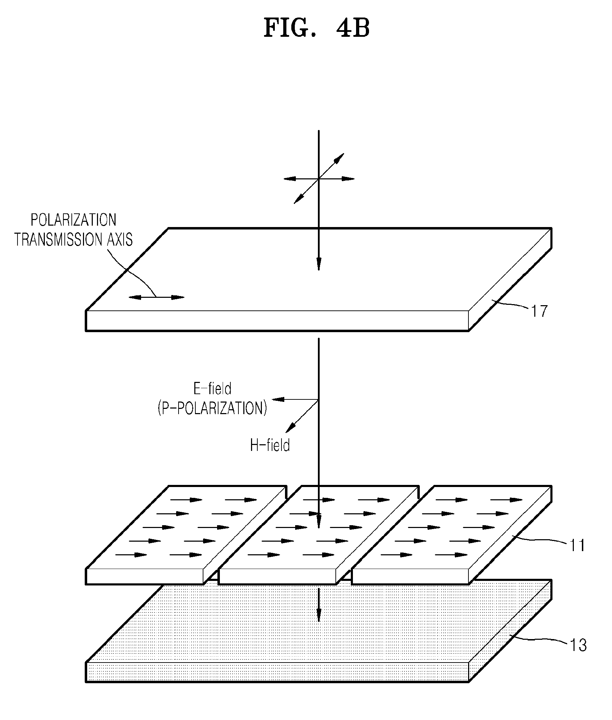

FIGS. 4A and 4B illustrate a normally white mode structure when a magnetic material layer, which is designed to reflect incident light in a state where magnetic moments are randomly oriented, is applied to a reflective magnetic display.

Referring to FIGS. 4A and 4B, the reflective magnetic display includes a two-dimensional array of magnetic material layer regions 11 to switch the reflection of the incident light. Each of the magnetic material layer regions 11 may be formed with the magnetic material layer 5. In the reflective magnetic display, each of the magnetic material layer regions 11 corresponds to a pixel or a sub-pixel.

A polarizer 17 (for example, an absorption-type linear polarizer) having a polarization transmission axis in parallel with the magnetic moment-aligned direction (+x direction) is disposed above the array of the magnetic material layer regions 11. An absorption member 13 for absorbing light passing through the magnetic material layer regions 11 is disposed under the magnetic material layer regions 11. In FIGS. 4A and 4B, the reference characters E-field and H-field indicate electric and magnetic field directions of the light, respectively.

Referring to FIG. 4A, when no external magnetic field is being applied and thus the magnetic moments of the magnetic material layer regions 11 are randomly oriented, the effective magnetization becomes approximately zero (M=0). Only linearly polarized light (e.g., P-polarized light), having an electric field (E-field) in parallel with the polarization transmission axis of the polarizer 17 will pass through the polarizer 17 and be incident on the magnetic material layer regions 11. The P-polarized light will be reflected by the magnetic material layer regions 11 and then the P-polarized light will again passes through the polarizer 17, thereby displaying a white color.

Referring to FIG. 4B, when the external magnetic field is applied and thus the magnetic moments of the magnetic material layer regions 11 are aligned in the external magnetic field direction (+x direction), the effective magnetization exists (M≠0). Only linearly polarized light (e.g., P-polarized light), having an electric field (E-field) in parallel with the polarization transmission axis of the polarizer 17 will pass through the polarizer 17 and be incident on the magnetic material layer regions 11. The P-polarized light also passes through the magnetic material layer regions 11 and then the P-polarized light is absorbed by the absorption member 13, thereby displaying a black color.

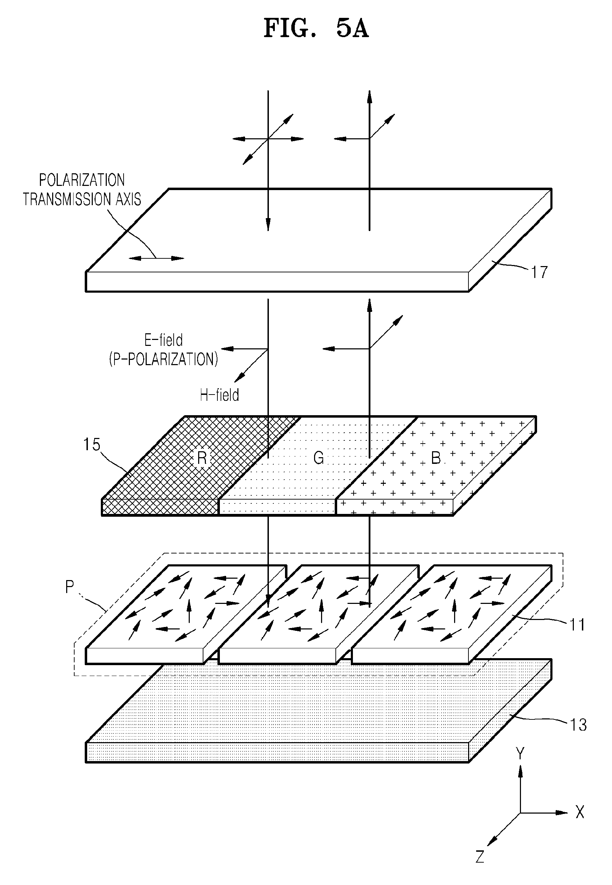

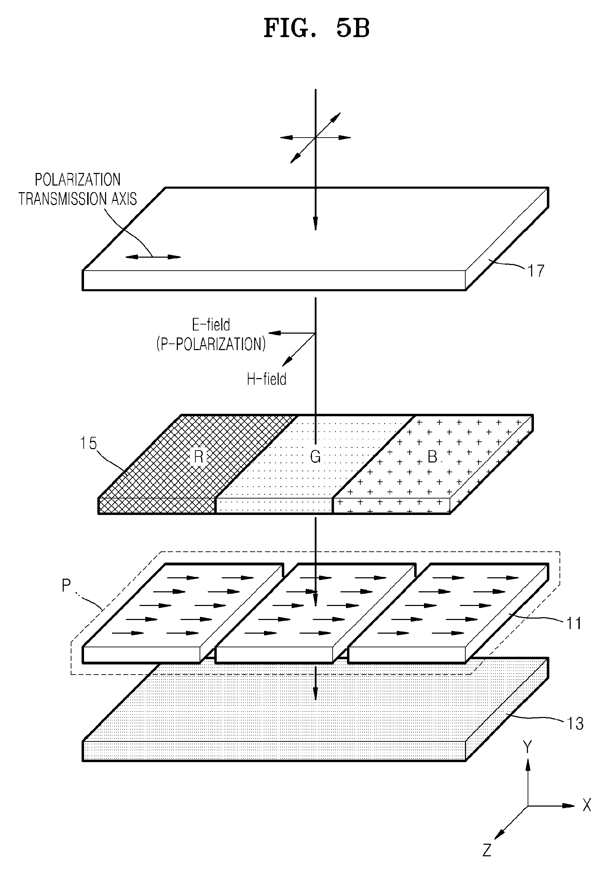

FIGS. 5A and 5B illustrate a normally white mode structure when a magnetic material layer 5, which is designed to reflect incident light in a state where magnetic moments are randomly oriented, is applied to a reflective magnetic color display.

When a color filter 15 is further disposed between the polarizer 17 and the array of the magnetic material layer regions 11, color elements of the color filter 15 correspond to the respective magnetic material layer regions 11, for example, if each of the pixels are operated with three sub-pixels R, G, B, one pixel P corresponds to three magnetic material layer regions 11. When the magnetic moments of the three magnetic material layer regions 11 corresponding to one pixel P are in a randomly oriented state, the pixel displays the white color. When the magnetic moments of one of the three magnetic material layer regions 11 are in the randomly oriented state and the magnetic moments of the rest of the three magnetic material layer regions 11 are in an aligned state, the pixel displays any one color image of R, G and B. When the magnetic moments of all three magnetic material layer regions 11 corresponding to one pixel P are in an aligned state, the pixel displays the black color. A gray level of the pixel P can be adjusted by adjusting an alignment degree of the magnetic moments of the three magnetic material layer regions 11.

Meanwhile, a magnetic material applied to the reflective magnetic display may have a property of absorbing the incident light by displaying the black color when the magnetic moments are randomly oriented, and transmitting or reflecting the incident light when the magnetic moments are aligned by the application of the external magnetic field in accordance with the polarization.

A magnetic material (hereinafter, referred to as "absorption magnetic material") that absorbs the incident light when the magnetic moments are randomly oriented may be a material containing iron such as iron oxide or an alloy containing iron. This absorption of light represents the black color in a randomly oriented state.

Like the magnetic material layer 5 formed by applying a magnetic material that reflects the incident light when the magnetic moments are randomly oriented as described with reference to FIGS. 3A and 3B, a magnetic material layer using the absorption magnetic material may be formed by multi-stacking magnetic particles each having a core shell structure enclosing the core by using insulation madium or each having only the core, or may be formed by dispersing the magnetic particles in an inorganic or organic insulation matrix. The magnetic material layer using the absorption magnetic material may be formed by a process similar to the above-described process for forming the magnetic material layer that reflects the incident light when the magnetic moments are randomly oriented.

The reflective magnetic display having the magnetic material layer using the absorption magnetic material may operate in a normally black mode.

The layer formed with the absorption magnetic material forms a switching region in a reflective magnetic display of another embodiment of the present invention, which operates in the normally black mode.

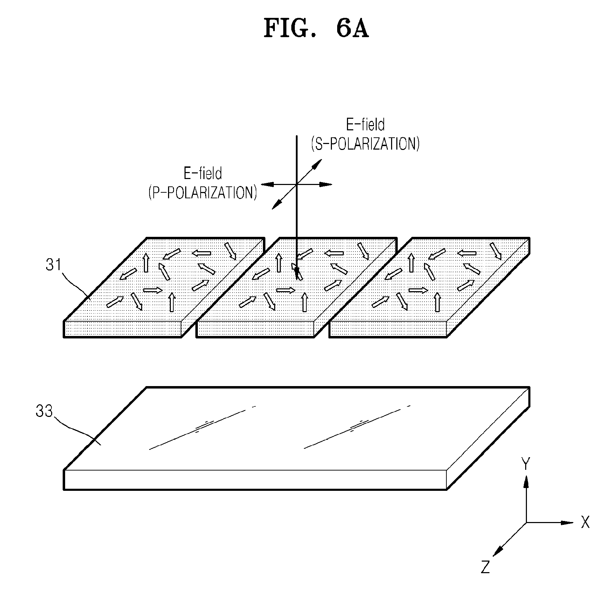

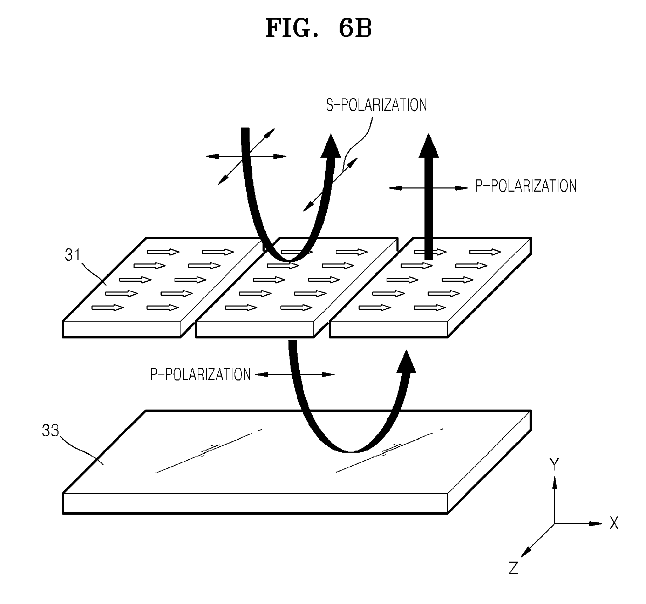

FIGS. 6A and 6B illustrate a normally black mode structure when a magnetic material layer, which is designed to absorb incident light in a state where magnetic moments are randomly oriented, is applied to a reflective magnetic display.

Referring to FIGS. 6A and 6B, the reflective magnetic display includes a two-dimensional array of magnetic material layer regions 31 to switch the reflection of the incident light. Each of the magnetic material layer regions 31 has a magnetic material layer that absorbs the incident light when the magnetic moments are randomly oriented. Since the magnetic material layer 31 absorbs the incident light regardless of the polarization when the magnetic moments are randomly oriented and since the magnetic material layer 31 transmits or reflects the incident light when the magnetic moments are aligned in one direction, there is no need to provide a polarizer above the magnetic material layers 31. In addition, when a reflection member 33 for reflecting the light passing through the magnetic material layer regions 31 is further provided under the magnetic material layer regions 31, an amount of display light emitted from the magnetic material layer regions 31 may ideally be twice the amount of display light emitted from the normally white mode structure that is described with reference to FIGS. 4A, 4B, 5A, and 5B. Therefore, the brightness of the reflective magnetic display can be significantly improved.

Referring to FIG. 6A, when no external magnetic field is applied and thus the magnetic moments of the magnetic material layer regions 11 are randomly oriented, the effective magnetization becomes approximately zero (M=0). Unpolarized light incident from an external light source is incident on the magnetic material layer regions 31 having the magnetic moments that are randomly oriented and absorbed in the magnetic material layer regions 31. Therefore, since no light is reflected by or passes through the magnetic material layer regions 31, the black color is displayed. Here, a ratio between S-polarized light and P-polarized light in the unpolarized light is approximately 1:1.

Referring to FIG. 6B, when the external magnetic field is applied and thus the magnetic moments of the magnetic material layer regions 11 are aligned in the external magnetic field direction (+x direction), the effective magnetization exists (M≠0). Light (e.g., S-polarized light perpendicular to the magnetic moment-aligned direction) having a magnetic field in parallel with the magnetic moment-aligned direction is reflected by the magnetic material layer regions 31. Light (e.g., P-polarized light in parallel with the magnetic moment-aligned direction) having a magnetic field perpendicular to the magnetic moment-aligned direction passes through the magnetic material layer regions 31. The light passing through the magnetic material layer regions 31 is reflected by the reflection member 33 and passes through the magnetic material layer regions 31 again. Therefore, the light incident on the magnetic material layer 31 from an external light source is emitted entirely from the magnetic material layer regions 31 to an external side, thereby displaying the white color.

When the color filter 15 shown in FIGS. 5A and 5B are further provided above the array of the magnetic material layer regions 31 of FIGS. 6A and 6B, a reflective magnetic color display having a normally black mode can be realized. Since it will be understood by those of ordinary skill in the art that this modification can be easily made, a detailed drawing thereof will be omitted herein.

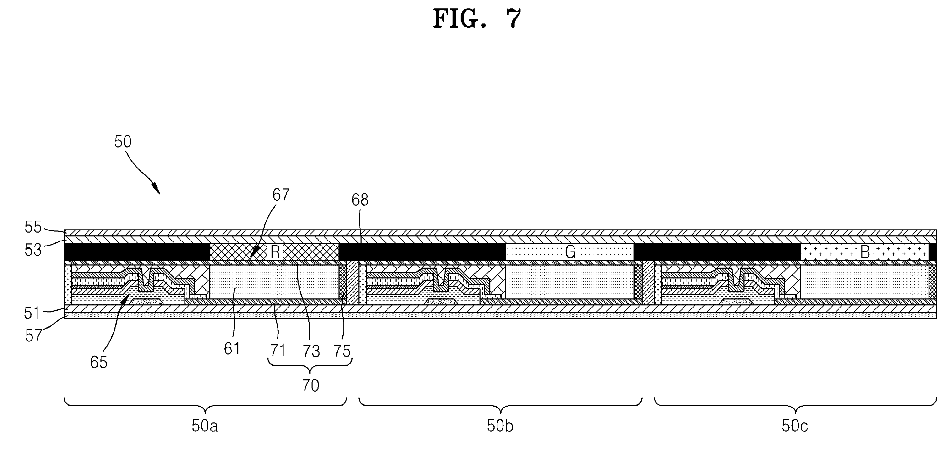

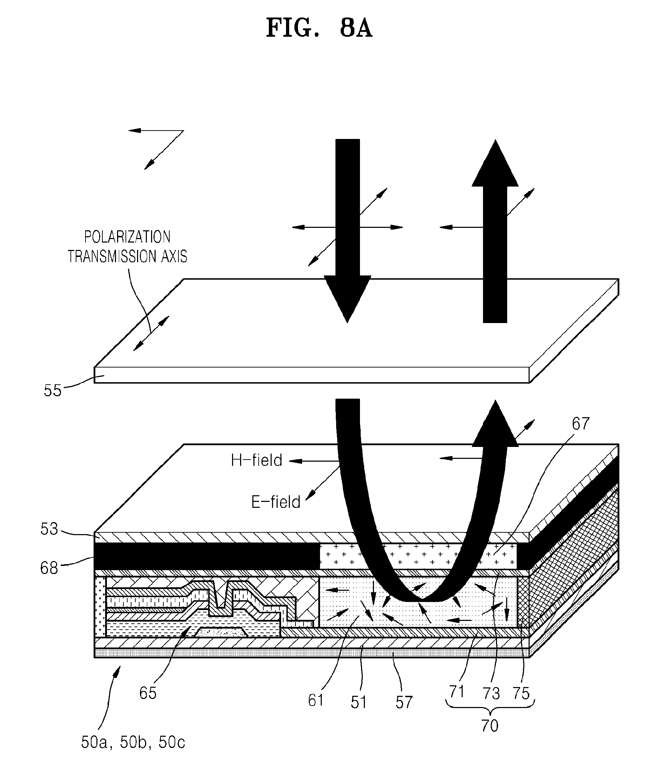

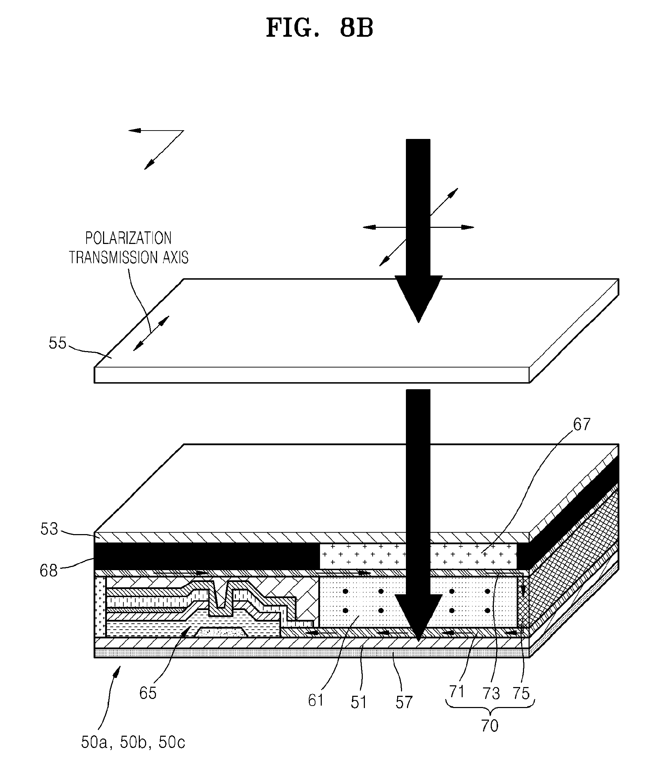

FIG. 7 is a schematic sectional view of a reflective magnetic display 50 having a normally white mode according to an embodiment of the present invention and FIGS. 8A and 8B illustrate reflection switching of incident light in accordance with an aligned state of magnetic moments in one sub-pixel of the reflective magnetic display 50 of FIG. 7.

Referring to FIGS. 7 through 8B, the reflective magnetic display 50 of the current embodiment of the present invention uses a device for switching the reflection of the incident light in accordance to a switching of the magnetic moments to an aligned state or a randomly oriented state to display an image by adjusting an on or off state of the reflection light.

That is, the reflective magnetic display 50 of the current embodiment of the present invention includes a front substrate 53, a rear substrate 51, magnetic material layer regions 61 having magnetic particles, which reflect the incident light when the magnetic moments are randomly oriented and reflect or transmit the incident light in accordance with polarization when the magnetic moments are aligned in one direction, and an electrode 70 that is designed to apply magnetic field for inducing the alignment of the magnetic moments on the magnetic material layer regions 61 in accordance with electrical operation.

The front substrate 53 may be a transparent substrate for at least visible light. The rear substrate 51 may be a transparent substrate at least for the visible light. However, when an absorption member 57 is disposed inside the rear substrate 51 and the magnetic material layers 65 are formed on the absorption member 57, the rear substrate 51 may be a non-transparent substrate.

In the current embodiment of the present invention, magnetic material layers for realizing a normally white mode in which the incident light is reflected when the magnetic moments are randomly oriented as described with reference to FIGS. 1 through 5B are formed at the magnetic material layer regions 61.

In this case, when the magnetic moments of the magnetic material layer regions 61 are aligned, the magnetic material layer regions 61 reflect or transmit the incident light in accordance with polarization. That is, the magnetic material layer regions 61 transmit light having a magnetic field perpendicular to an aligned direction of the magnetic moments (i.e., light having polarization in parallel with the aligned direction of the magnetic moments) and reflect light having a magnetic field in parallel with the aligned direction of the magnetic moments (i.e., light having polarization perpendicular to the aligned direction of the magnetic moments).

Therefore, when the magnetic material layer regions 61 are designed to reflect the incident light when the magnetic moments are randomly oriented as described above, light having the magnetic field perpendicular to the magnetic moment-aligned direction may be incident on the magnetic material layer region 61, thereby switching reflection of incident light in accordance with switching magnetic moment alignment state.

To this end, the reflective magnetic display 50 of the current embodiment of the present invention may further include a polarizer 55 (e.g., a linear polarizer) disposed to the front substrate 53 to have a polarization transmission axis in parallel with the magnetic moment aligned direction.

In addition, an absorption member 57 for absorbing light passing through the magnetic material layer regions 61 may be further provided on a surface below the rear substrate 51. In this case, the rear substrate 51 may be a transparent substrate as described above. The absorption member 57 may be provided on an inner surface of the rear substrate 51. In this case, the rear substrate 51 may be a non-transparent or transparent substrate.

The reflective magnetic display 50 of the current embodiment of the present invention may further comprise a color filter 67 on the front substrate 53 to realize a color display.

FIG. 7 illustrates a pixel of the reflective magnetic display according to an embodiment of the present invention for color display. The reflective magnetic display 50 of this embodiment may have a two-dimensional array of pixels shown in FIG. 7.

The color filter 67 may include red, green and blue color filter elements for each pixel. A black matrix 68 may be formed between the color filter elements. When the color display is realized, each of the pixels may be formed with a plurality of sub-pixels. For example, as shown in FIG. 7, each of the pixels has first, second, and third sub-pixels 50a, 50b, and 50c to display red, green, and blue images.

Meanwhile, each of the sub-pixels 50a, 50b, and 50c may include an operation circuit (e.g., a thin film transistor (TFT) 65) for independently operating the sub-pixel with a gray scale. That is, each of the sub-pixels 50a, 50b, and 50c may include the magnetic material layer region 61 and the TFT 65. The electrode 70 is formed on the magnetic material layer region 61 to apply an external magnetic field for the magnetic moment alignment.

The electrode 70 is connected to a sub-pixel electrode 71 disposed on the rear substrate 51, a common electrode 73 disposed on the front substrate 53 and a conductive barrier rib 75 electrically connected with the sub-pixel electrode 71 and the common electrode 73. The conductive barrier rib 75 is disposed between the sub-pixels so that the electrode 70 can form a loop circuit in unit of the sub-pixels.

The sub-pixel electrode 71 may be formed of a transparent material such as ITO. Alternatively, the sub-pixel electrode 71 may be formed of a non-transparent electrode material having resistance lower than that of ITO. For example, the non-transparent electrode material may be one of aluminum, silver, copper, and platinum. In this case, the sub-pixel electrode 71 of non-transparent electrode material may be provided with an opening through which light from the sub-pixels or pixels can pass.

The conductive barrier rib 75 may be formed of a transparent or non-transparent electrode material.

The common electrode 73 may be a transparent electrode such as an ITO electrode that is formed on an entire surface to cover entire magnetic material layer regions 61.

The common electrode 73 may be a transparent electrode (ITO electrode) for independent operation in units of sub-pixels. The common electrode 73 may be formed through a patterning process. In this case, contrast ratio deterioration caused by a leakage current to a sub-pixel adjacent to a driven sub-pixel can be prevented. The common electrode 73 may be formed through a patterning process so that it can be operated in units of pixels.

The following will illustrate an operation of the above-described reflective magnetic display 50.

When the TFT 65 provided on the sub-pixel 50a, 50b, or 50c is turned gate-off and thus no external magnetic field is applied to the corresponding magnetic material layer region 61, the magnetic moments of the magnetic material layer region 61 are randomly oriented as shown in FIG. 8A. Therefore, linearly polarized external light passing through the polarizer 55 is reflected on the magnetic material layer 61 and passes through the polarizer 55 to be emitted frontward. Therefore, the sub-pixel 50a, 50b, or 50c displays a specific color.

On the contrary, when the TFT 65 of the sub-pixel 50a, 50b, or 50c is turned gate-on and thus a current flows through the common electrode 73, the conductive barrier rib 75, and the sub-pixel electrode 71 to form, for example, a clockwise current loop, the magnetic moments of the magnetic material layer region 61 provided on the sub-pixel 50a, 50b, or 50c are aligned in a direction parallel to a polarization transmission axis of the polarizer 55. Therefore, linearly polarized external light passing through the polarizer 55 passes through the magnetic material layer regions 61 and is absorbed in the absorption member 57. Therefore, the sub-pixel 50a, 50b, or 50c displays a black color.

Therefore, in FIG. 7, when the magnetic material layer regions 61 of the respective first, second, and third sub-pixels 50a, 50b, and 50c are in a field-off state where no external magnetic field is applied, the magnetic moments are randomly oriented and thus the pixel having the first, second, and third pixels 50a, 50b, and 50c displays the white color.

For example, when the magnetic moments of only one of the first, second, and third sub-pixels 50a, 50b, and 50c are randomly oriented and the magnetic moments of the rest of the sub-pixels 50a, 50b, and 50c are aligned in one direction, the corresponding pixel displays one of red, green, and blue colors.

When the current is applied to the first, second, and third sub-pixels 50a, 50b, and 50c and thus the corresponding magnetic material layer regions 61 are in a field-on state where the external magnetic field is applied, the magnetic moments of the magnetic material layer regions 61 of the respective first, second, and third pixels 50a, 50b, and 50c are aligned in one direction, thereby displaying the black color.

When an alignment degree of the magnetic moments of the magnetic material layer regions 61 is controlled by adjusting the current applied to the first, second, and third sub-pixels 50a, 50b, and 50c, a gray level of each of the pixels can be adjusted.

Therefore, the reflective magnetic display 50 of this embodiment operates with a normally white mode and realizes a color image.

In FIG. 7, when the color filter 67 is omitted, the first, second, and third pixels 50a, 50b, and 50c become respective pixels and the reflective magnetic display 50 of the current embodiment of the present invention operates with a normally white mode and displays a monochrome image.

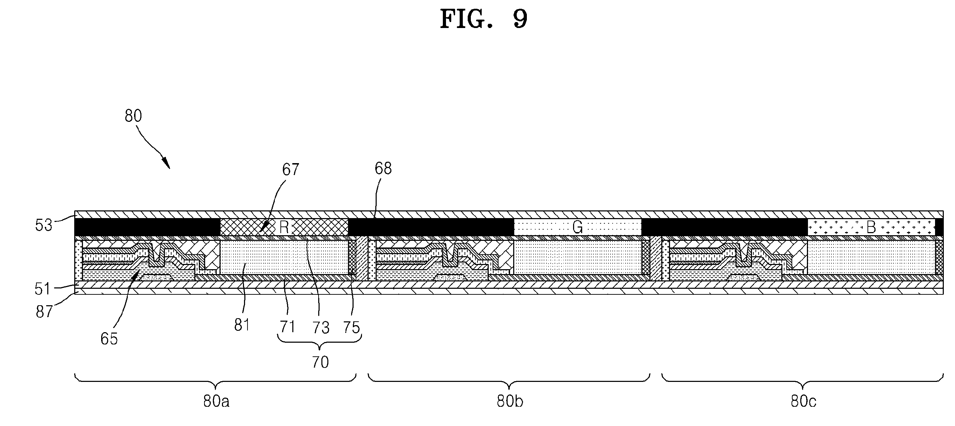

FIG. 9 is a schematic sectional view of a reflective magnetic display having a normally black mode according to another embodiment of the present invention. In FIGS. 7 and 9, like reference numerals refer to like elements.

Comparing FIG. 7 and FIG. 9 with each other, a magnetic material layer that realizes a normally black mode for absorbing incident light during random orientation of magnetic moments with reference to FIGS. 6A and 6B is formed on magnetic material layer regions 81 of a reflective magnetic display 80 according to another embodiment of the present invention. That is, the magnetic material layer regions 81 are formed containing magnetic particles that absorb the incident light when the magnetic moments are randomly oriented and reflect or transmit the incident light in accordance with polarization when the magnetic moments are aligned in one direction.

Instead of the absorption member shown in FIG. 7, a reflective member 87 may further be provided on the surface beneath the rear substrate 51.

Specifically, unpolarized light may be incident on the reflective magnetic display 80 of FIG. 9. Therefore, the reflective magnetic display 80 of FIG. 9 does not need the polarizer shown in FIG. 7 as described with reference to FIGS. 6A and 6B. Furthermore, an effective amount of display light of the reflective magnetic display 80 of FIG. 9 is twice the amount of light of the reflective magnetic display of FIG. 7.

The reflective magnetic display 80 of FIG. 9 also displays a color image. When a color filter 67 is omitted from FIG. 9, the first, second, third sub-pixels 50a, 50b, and 50c function as respective pixels, and a monochrome image is displayed.

Since operation of the reflective magnetic display 80 of FIG. 9 can be sufficiently inferred from the operational description of the reflective magnetic display of FIG. 7 and the description referring to FIGS. 6A and 6B, a detailed description thereof will be omitted herein.

While a reflective magnetic display using a magnetic material according to the present invention has been particularly shown and described with reference to exemplary embodiments thereof, it will be understood by those of ordinary skill in the art that various changes in form and details may be made therein without departing from the scope of the present invention as defined by the following claims.

## Claims

1. A reflective magnetic display comprising:
a magnetic material layer region formed between front and rear substrates, wherein the magnetic material layer region comprises magnetic particles that reflect incident light when magnetic moments are randomly oriented and that reflect or transmit the incident light, in accordance with polarization of the incident light, when the magnetic moments are aligned in one direction;
an electrode that applies a magnetic field inducing a magnetic moment alignment on the magnetic material layer region in accordance with electrical operation; and
a polarizer that is disposed on the front substrate and has a polarization transmission axis in parallel with the magnetic moments of the magnetic material layer region when the magnetic moments are aligned in the one direction.

2. The reflective magnetic display of claim 1, further comprising an absorption member that is disposed on the rear substrate to absorb light passing through the magnetic material layer region.

3. A reflective magnetic display comprising:
a magnetic material layer region formed between front and rear substrates, wherein the magnetic material layer region comprises magnetic particles that absorb incident light when magnetic moments are randomly oriented and that reflect or transmit the incident light in, accordance with polarization of the incident light, when the magnetic moments are aligned in one direction; and
an electrode that is designed to apply a magnetic field inducing a magnetic moment alignment on the magnetic material layer region in accordance with electrical operation,
wherein un polarized light is incident on the magnetic material layer region.

4. The reflective magnetic display of claim 3, wherein the magnetic particles comprise iron oxide.

5. The reflective magnetic display of claim 3 or 4, further comprising a reflection member for reflecting the light passing through the magnetic material layer region towards the magnetic material layer region.

6. The reflective magnetic display of any preceding claim, wherein the magnetic particles are formed of at least one material selected from the group consisting of iron, cobalt, palladium, and nickel, an alloy thereof and a paramagnetic material.

7. The reflective magnetic display of any preceding claim, wherein each of the magnetic particles is formed in a core-shell structure comprising a magnetic core and an insulation shell enclosing the magnetic core.

8. The reflective magnetic display of any preceding claim, wherein each of the magnetic particles comprises only a magnetic core.

9. The reflective magnetic display of claim 7 or 8, wherein the magnetic material layer region is formed by at least one of: stacking the magnetic particles or dispersing the magnetic particles in an inorganic insulation matrix or dispersing the magnetic particles in an organic insulation matrix.

10. The reflective magnetic display of any preceding claim, further comprising a pixel comprising a plurality of sub-pixels and a color filter disposed on the front substrate to display a color image, wherein each of the sub-pixels has the magnetic material layer region.

11. The reflective magnetic display of claim 10, wherein the electrode comprises:
a sub-pixel electrode disposed on the rear substrate;
a common electrode disposed on the front substrate;
a conductive barrier rib electrically connected to the sub-pixel electrode and the common electrode, and disposed between the sub-pixels, thereby forming a loop circuit for each of the sub-pixels.

12. The reflective magnetic display of claim 11, wherein the common electrode is at least one of: formed on an entire surface or patterned to be operated in units of sub-pixels or formed to be operated in units of pixels.

13. The reflective magnetic display of claim 11 or 12, wherein at least one of the sub-pixel electrode, the common electrode, and the conductive barrier rib is transparent.

14. A magnetic material layer region for a reflective magnetic display, comprising:
magnetic particles that reflect incident light when magnetic moments are randomly oriented and that reflect or transmit the incident light, in accordance with polarization of the incident light, when the magnetic moments are aligned in one direction.

15. A magnetic material layer region for a magnetic display, comprising:
magnetic particles that absorb incident light when magnetic moments are randomly oriented and that reflect or transmit the incident light, in accordance with polarization of the incident light, when the magnetic moments are aligned in one direction.
